# EUROPEAN PATENT SPECIFICATION

(11) **EP 3 667 765 B1**
(45) Date of publication and mention of the grant of the patent: **03.08.2022**
(21) Application number: 19182854.0
(22) Date of filing: 27.06.2019
(51) Int. Cl.: H01M 50/20

(54) **BATTERY PACK**
BATTERIEPACK
BLOC-BATTERIE

(30) Priority: 14.12.2018 KR 20180161958
(43) Date of publication of application: 17.06.2020
(73) Proprietor: HYUNDAI MOTOR COMPANY, Seoul 06797 (KR); Kia Corporation, Seocho-gu Seoul 06797 (KR)
(72) Inventor: AHN, Jin Han, 06797 Seoul (KR)
(74) Representative: Viering, Jentschura & Partner mbB Patent- und Rechtsanwälte

(56) References cited:
- EP-A1- 3 382 774
- US-A1- 2012 244 392
- US-A1- 2015 249 238

## Description

### BACKGROUND OF THE INVENTION

### Field of the invention

The present invention relates to a battery pack according to the preamble of claim 1, and, more particularly, to a battery pack that can prevent dielectric breakdown even if cooling water leaks from a cooling block that provides cooling water supply passages.

### Description of Related Art

In general, batteries that are mounted in vehicles to store electrical energy are provided in a battery pack of a type that can output a desired voltage by configuring a battery module that outputs a predetermined level of voltage by connecting a plurality of battery cells that output a unit voltage and, then connecting a plurality of these battery modules.

Conventional battery packs include a cooling block for providing cooling water to remove heat which is generated from battery modules or to increase the temperature of battery modules to reduce the charging time in wintertime. That is, the temperature of the battery modules is decreased by supplying cooling water that has been cooled to a cooling block when heat is generated by use of battery modules, or the temperature of battery modules is increased by supplying cooling water that has been heated to appropriate temperature to a cooling block to reduce time for charging the battery modules in wintertime.

According to conventional battery packs, a cooling block is disposed in direct contact with battery modules in a case of the battery packs. According to these battery packs of the related art, when the battery pack is damaged or a connection of a hose for supplying cooling water to the cooling block is faulty, the cooling water leaks in the battery packs. Accordingly, insulation is broken due to the leaking cooling water in the battery packs of the related art, so other electric devices therein are damaged or malfunction, whereby the engine may be stopped, or if severe, a fire may occur while a vehicle is driven.

The information included in this Background of the Invention section is only for enhancement of understanding of the general background of the invention and may not be taken as an acknowledgement or any form of suggestion that this information forms the prior art already known to a person skilled in the art.

From EP 3 382 774 A1 a battery pack for a vehicle according to the preamble of claim 1 is known. Further, a battery pack with thermal control is described in US 2012/244392 A1 and a housing for an electric module of a battery pack is described in US 2015/249238 A1.

### BRIEF SUMMARY

The present invention is directed to providing a battery pack that can prevent dielectric breakdown even if cooling water leaks from a cooling block that provides cooling water supply passages.

The present invention provides a battery pack with teh features according to claim 1. Further preferred embodiments of the battery pack are described in the dependent claims.

In an exemplary embodiment of the present invention, the at least one concave portion may form predetermined cooling paths.

An exemplary embodiment of the present invention may further include a heat transfer substance disposed between the battery modules and the bottom plate.

In an exemplary embodiment of the present invention, the bottom portion of the cooling block may be externally exposed when the battery pack is mounted on the underside of a vehicle body.

In an exemplary embodiment of the present invention, the cooling block may be made of plastic.

According to the battery pack, since the cooling block is attached to the bottom portion of the bottom plate of the case fixing the battery modules on the top portion thereof, that is, is disposed outside the case, it is possible to prevent an accident caused by dielectric breakdown by preventing cooling water from flowing into the case when the cooling water leaks from the cooling block.

Furthermore, according to the battery pack, since a top is not separately provided for the cooling block and the cooling water which is supplied to the cooling block comes in direct contact with the bottom plate of the case, it is possible to solve problems due to leakage of the cooling water without deteriorating cooling performance even though the cooling block is disposed outside the case.

The effects of the present invention are not limited to the effects described above and other effects may be clearly understood by those skilled in the art from the following description.

### BRIEF DESCRIPTION OF THE DRAWINGS

FIG. 1 is an exploded perspective view of a battery pack according to an exemplary embodiment of the present invention;
FIG. 2 is a bottom perspective view of the battery pack mounted in accordance with various exemplary embodiments of the present invention shown in FIG. 1;
FIG. 3 is a cross-sectional view briefly showing a cross-section of the battery pack according to an exemplary embodiment of the present invention; and
FIG. 4 is a view showing the state in which the battery pack according to an exemplary embodiment of the present invention is mounted on a vehicle.

It may be understood that the appended drawings are not necessarily to scale, presenting a somewhat simplified representation of various features illustrative of the basic principles of the present invention.

In the figures, reference numbers refer to the same or equivalent parts of the present invention throughout the several figures of the drawing.

### DETAILED DESCRIPTION

A battery pack according to various embodiments of the present invention is described hereafter in detail with reference to the accompanying drawings.

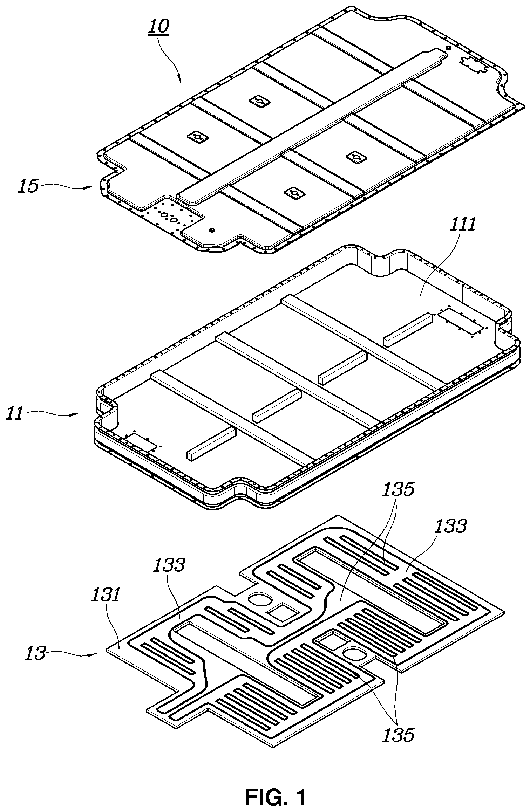

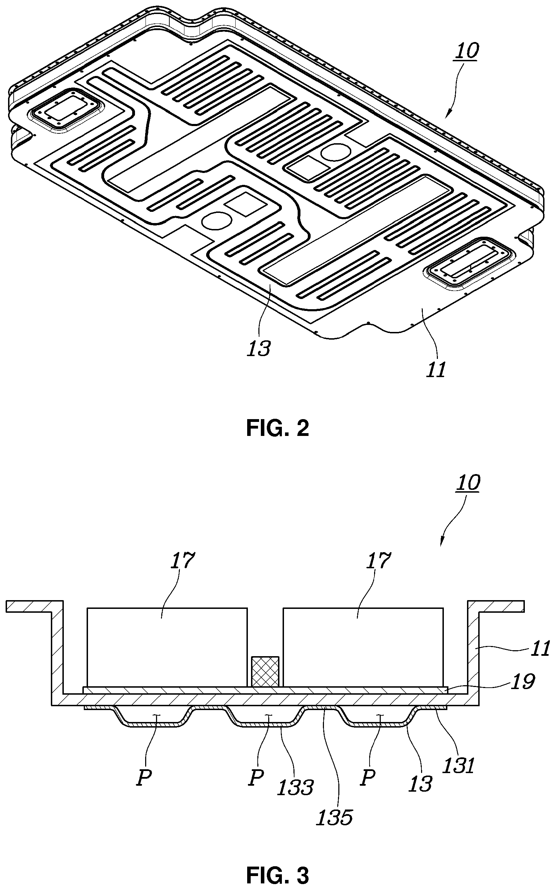

FIG. 1 is an exploded perspective view of a battery pack according to an exemplary embodiment of the present invention, FIG. 2 is a bottom perspective view of the battery pack mounted in accordance with various exemplary embodiments of the present invention shown in FIG. 1, and FIG. 3 is a cross-sectional view briefly showing a cross-section of the battery pack according to an exemplary embodiment of the present invention.

Referring to FIG. 1, FIG. 2, and FIG. 3, a battery pack 10 according to an exemplary embodiment of the present invention includes: a case 11 including a bottom plate 111 having a top to which battery modules 17 that are heat sources are fixed; and a cooling block 13 attached to the bottom portion of the bottom plate 111 and being provided with cooling water for removing heat generated by the battery modules 17.

The case 11 may include the bottom plate 111 which is a member for fixing the battery modules 17 and the battery modules 17 may be fixed at predetermined positions on the top portion of the bottom plate 111. Sides extending upward may be formed around the edge portion of the bottom plate 111 and the upper end portions of the sides may be bonded to a top cover 15. That is, a sealed internal space may be formed by bonding the top cover 15 and the case 11 to each other and the battery modules 17 may be fixed in the internal space.

The case 11 is also referred to as a case in consideration of the positional relationship with the top cover.

The cooling block 13, which is a portion for providing cooling water passages for flow of cooling water, may be disposed on the bottom portion of the bottom plate 111 of the case 11, that is, outside the internal space formed by the top cover 15 and the case 11.

As described above, according to an exemplary embodiment of the present invention, since the cooling block 13 through which cooling water flows is disposed outside separately from the space in which the battery modules 17 are disposed, cooling water is prevented from flowing into the internal space of the case in which the battery modules 17 and electric devices are disposed when the cooling water leaks from the cooling block 13, being able to prevent an accident caused by dielectric breakdown.

In an exemplary embodiment of the present invention, the cooling block 13 may be engraved portions, that is, concave portions 133, edge portions 131 being at a higher level than the concave portions 133, and convex portions 135 when seen from the case 11.

The edge portions 131 and the convex portions 135 of the cooling block 13 may be at the same level, and when the cooling block 13 is attached to the bottom plate 111 of the case 11, the edge portions and the convex portions 135 are brought in direct contact with the bottom portion of the bottom plate 111 of the case 11. Accordingly, the concave portions 133 form cooling water passages P through which cooling water can flow by being spaced apart a predetermined distance from the bottom portion of the bottom plate 111 of the case 11.

According to the present structure, when cooling water is supplied to the concave portions 133, the cooling water cools the battery modules 17 that are heat sources by coming in direct contact with the bottom portion of the bottom plate 111 of the case 11. Obviously, a heat transfer substance 19 (e.g., an insulating heat transfer pad or a heat transfer adhesive) may be disposed between the battery modules 17 and the bottom plate 111.

In an exemplary embodiment of the present invention, the heat transfer substance 19 (e.g., an insulating heat transfer pad or a heat transfer adhesive) may be disposed between the battery modules 17 and the bottom plate 111 inside the case 11.

A cooling block is disposed under battery modules in a case, so that the cooling block itself has to have a top plate. Accordingly, in the battery packs of the related art, heat transfers sequentially in the order of battery modules, a heat transfer substance, the top portion of a cooling block, and cooling water. According to an exemplary embodiment of the present invention, heat transfers sequentially in the order of the battery modules 17, the heat transfer substance 19, the bottom plate 111 of the case 11, and the cooling water.

According to embodiment of the present invention, as compared with the battery packs having a cooling block of the related art, there is no additional element in a process of heat transfer even though the cooling block is disposed outside the case, as described above, so it is possible to solve the problem due to leakage of cooling water while maintaining the cooling performance.

As described above, since the concave portions 133 of the cooling block 13 are passages P through which cooling water flows, it is possible to form predetermined cooling paths that can achieve optimal cooling in consideration of the positions of the battery modules 17 on the top portion of the bottom plate 111 of the case 11.

Meanwhile, the cooling block 13 may be made of plastic in an exemplary embodiment of the present invention. In the related art, the cooling block 13 is disposed in a case and should be in direct contact with the battery modules, so a metallic plate should be used and welded to the battery modules in consideration of hermetic sealing and heat transfer performance. However, according to an exemplary embodiment of the present invention, since the cooling block 13 is attached to the external side of the case, the cooling block 13 may be made of plastic and attached to the external side of the case. Therefore, it is possible to reduce the cost of manufacturing the cooling block and more freely form cooling water paths.

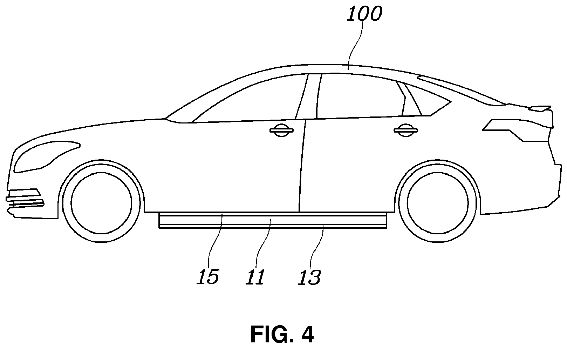

FIG. 4 is a view showing the state in which the battery pack according to an exemplary embodiment of the present invention is mounted on a vehicle.

As shown in FIG. 4, the battery pack 10 according to an exemplary embodiment of the present invention may be mounted on the underside of a vehicle body 100. The top cover 15 of the battery pack 10 is in direct contact with the vehicle body and the cooling block 13 attached to the bottom portion of the case 11 is disposed at the lowermost position and exposed to the external environment.

Accordingly, even if cooling water leaks out of the cooling block 13 due to damage to the cooling block 13 or poor connection of a hose to the cooling block 13 with the battery pack 10 according to an exemplary embodiment of the present invention mounted on a vehicle, the leaking cooling water is discharged outside without flowing into the space formed by the top cover 15 and the case 13. Therefore, it is possible to prevent problems such as damage to battery modules, damage to internal electric devices due to dielectric breakdown, and consequent stoppage of an engine and fire.

For convenience in explanation and accurate definition in the appended claims, the terms "upper", "lower", "inner", "outer", "up", "down", "upper", "lower", "upwards", "downwards", "front", "rear", "back", "inside", "outside", "inwardly", "outwardly", "internal", "external", "inner", "outer", "forwards", and "backwards" are used to describe features of the exemplary embodiments with reference to the positions of such features as displayed in the figures.

It will be further understood that the term "connect" or its derivatives refer both to direct and indirect connection.

Further, in the battery pack, the top cover may be in direct contact with the underside of the vehicle body, and the case may form a sealed space by being covered on a top of the case with the top cover while the battery modules are mounted in the sealed space on a surface of the bottom plate.

For convenience in explanation and accurate definition in the appended claims, the terms "upper", "lower", "inner", "outer", "up", "down", "upper", "lower", "upwards", "downwards", "front", "rear", "back", "inside", "outside", "inwardly", "outwardly", "internal", "external", "inner", "outer", "forwards", and "backwards" are used to describe features of the exemplary embodiments with reference to the positions of such features as displayed in the figures.

It will be further understood that the term "connect" or its derivatives refer both to direct and indirect connection.

The foregoing descriptions of specific exemplary embodiments of the present invention have been presented for purposes of illustration and description. They are not intended to be exhaustive or to limit the present invention to the precise forms disclosed, and obviously many modifications and variations are possible in light of the above teachings. The exemplary embodiments were chosen and described to explain certain principles of the present invention and their practical application, to enable others skilled in the art to make and utilize various exemplary embodiments of the present invention, as well as various alternatives and modifications thereof. It is intended that the scope of the present invention be defined by the Claims appended hereto and their equivalents.

For example, further embodiments of the invention are as follows:
According to a first further embodiment, there is provided a battery pack which is mounted on an underside of a vehicle body, the battery pack comprising: a top cover being in direct contact with the underside of the vehicle body; a case forming a sealed space by being covered on a top of the case with the top cover, and including a bottom plate having a surface to which battery modules are mounted in the sealed space; and a cooling block attached to a bottom portion of the bottom plate and being provided with cooling water for removing heat generated by the battery modules, wherein a bottom portion of the cooling block is exposed to the outside of the vehicle body.

According to a second further embodiment, there is provided the battery pack of the first further embodiment, wherein the cooling block has edge portions, at least a concave portion being at a lower level than the edge portions, and at least a convex portion being at a same level as the edge portions, and wherein the cooling water is supplied to the at least a concave portion, so that the cooling water comes in direct contact with the bottom portion of the bottom plate.

According to a third further embodiment, there is provided the battery pack of second further embodiment, wherein the at least a concave portion forms predetermined cooling paths.

According to a fourth further embodiment, there is provided the battery pack of any of the first to third further embodiments, further including a heat transfer substance disposed between the battery modules and the bottom plate.

According to a fifth further embodiment, there is provided the battery pack of the fourth further embodiment, wherein the heat transfer substance is disposed between the battery modules and the bottom plate inside the case.

According to a sixth further embodiment, there is provided the battery pack of any of the first to fifth further embodiments, wherein the cooling block is made of plastic.

## Claims

1. A battery pack (10), comprising:
a case (11) including a bottom plate (111) having a surface to which battery modules (17) are mounted in the case (11); and
a cooling block (13) attached to a bottom portion of the bottom plate (111) and provided with cooling water for removing heat generated by the battery modules (17),
wherein the cooling block (13) has edge portions (131), at least a concave portion (133) being at a lower level than the edge portions (131), and at least a convex portion (135) being at a same level as the edge portions (131), **characterized in that**
the cooling water is supplied to the at least a concave portion (133), so that the cooling water comes in direct contact with the bottom portion of the bottom plate (111).

2. The battery pack (10) of claim 1, wherein the at least a concave portion (133) form predetermined cooling paths.

3. The battery pack (10) of claim 1 or 2, further including a heat transfer substance (19) disposed between the battery modules (17) and the bottom plate (111).

4. The battery pack (10) of claim 3, wherein the heat transfer substance (19) is disposed between the battery modules (17) and the bottom plate (111) inside the case (11).

5. The battery pack (10) of any of claims 1-4, wherein the bottom portion of the cooling block (13) is exposed outside a vehicle body when the battery pack (10) is mounted on an underside of the vehicle body.

6. The battery pack (10) of any of claims 1-5, wherein the cooling block (13) is made of plastic.

## Patentansprüche

1. Batteriepack (10), aufweisend:
ein Gehäuse (11), aufweisend eine Bodenplatte (111), die eine Fläche hat, an der Batteriemodule (17) in dem Gehäuse (11) montiert sind, und
einen Kühlblock (13), der an einem Bodenabschnitt der Bodenplatte (111) angebracht und mit Kühlwasser zum Abführen von durch die Batteriemodule (17) erzeugter Wärme versehen ist,
wobei der Kühlblock (13) aufweist: Randabschnitte (131), mindestens einen konkaven Abschnitt (133), der sich auf einem niedrigeren Niveau als die Randabschnitte (131) befindet, und mindestens einen konvexen Abschnitt (135), der sich auf dem gleichen Niveau wie die Randabschnitte (131) befindet, **dadurch gekennzeichnet, dass**
das Kühlwasser dem mindestens einen konkaven Abschnitt (133) zugeführt wird, so dass das Kühlwasser in direkten Kontakt mit dem Bodenabschnitt der Bodenplatte (111) kommt.

2. Batteriepack (10) gemäß Anspruch 1, wobei der mindestens eine konkave Abschnitt (133) vorbestimmte Kühlpfade bildet.

3. Batteriepack (10) gemäß Anspruch 1 oder 2, ferner aufweisend eine Wärmeübertragungssubstanz (19), die zwischen den Batteriemodulen (17) und der Bodenplatte (111) angeordnet ist.

4. Batteriepack (10) gemäß Anspruch 3, wobei die Wärmeübertragungssubstanz (19) zwischen den Batteriemodulen (17) und der Bodenplatte (111) innerhalb des Gehäuses (11) angeordnet ist.

5. Batteriepack (10) gemäß irgendeinem der Ansprüche 1 bis 4, wobei der Bodenabschnitt des Kühlblocks (13) außerhalb einer Fahrzeugkarosserie freiliegt, wenn der Batteriepack (10) an einer Unterseite der Fahrzeugkarosserie montiert ist.

6. Batteriepack (10) gemäß irgendeinem der Ansprüche 1 bis 5, wobei der Kühlblock (13) aus Kunststoff hergestellt ist.

## Revendications

1. Pack-batterie (10), comprenant :
un boîtier (11) comprenant une plaque de fond (111) ayant une surface sur laquelle des modules de batterie (17) sont montés dans le boîtier (11) ; et
un bloc de refroidissement (13) fixé à une partie de fond de la plaque de fond (111) et pourvu d'eau de refroidissement pour éliminer la chaleur générée par les modules de batterie (17),
dans lequel le bloc de refroidissement (13) a des parties de bord (131), au moins une partie concave (133) étant à un niveau inférieur aux parties de bord (131), et au moins une partie convexe (135) étant au même niveau que les parties de bord (131), **caractérisé en ce que**
l'eau de refroidissement est fournie à ladite au moins une partie concave (133), de sorte que l'eau de refroidissement vient en contact direct avec la partie de fond de la plaque de fond (111).

2. Pack-batterie (10) selon la revendication 1, dans lequel ladite au moins une partie concave (133) forme des chemins de refroidissement prédéterminés.

3. Pack-batterie (10) selon la revendication 1 ou 2, comprenant en outre une substance de transfert de chaleur (19) disposée entre les modules de batterie (17) et la plaque de fond (111).

4. Pack-batterie (10) selon la revendication 3, dans lequel la substance de transfert de chaleur (19) est disposée entre les modules de batterie (17) et la plaque de fond (111) à l'intérieur du boîtier (11).

5. Pack-batterie (10) selon l'une quelconque des revendications 1 à 4, dans lequel la partie de fond du bloc de refroidissement (13) est exposée à l'extérieur d'une carrosserie de véhicule lorsque le pack-batterie (10) est monté sur une face inférieure de la carrosserie de véhicule.

6. Pack-batterie (10) selon l'une quelconque des revendications 1-5, dans lequel le bloc de refroidissement (13) est fait de plastique.
